# EUROPÄISCHE PATENTSCHRIFT

(11) **EP 2 882 553 B1**
(45) Veröffentlichungstag und Bekanntmachung des Hinweises auf die Patenterteilung: **27.03.2019**
(21) Anmeldenummer: 13745435.1
(22) Anmeldetag: 07.08.2013
(51) Int. Cl.: B23B 31/117, B23B 31/00, B23B 31/20

(54) **AUSWUCHT- ODER MESSVORRICHTUNG**
BALANCING OR MEASURING DEVICE
DISPOSITIF D'ÉQUILIBRAGE OU DE MESURE

(30) Priorität: 10.08.2012 DE 102012015815
(43) Veröffentlichungstag der Anmeldung: 17.06.2015
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2013/066537
(87) Internationale Veröffentlichungsnummer: WO 2014/023760

(56) Entgegenhaltungen:
- DE-U1- 9 115 854
- JP-A- S63 283 805
- US-A1- 2010 270 756

## Beschreibung

Die Erfindung betrifft eine Auswucht- oder Messvorrichtung nach dem Oberbegriff des Anspruchs 1 und eine Auswucht- oder Messmaschine mit einer derartigen Auswucht- oder Messvorrichtung.

Aus der DE 199 61 451 A1 ist eine Auswuchtvorrichtung für einen Werkzeughalter gemäß dem Oberbegriff des Anspruchs 1 bekannt, bei der in einer Aufnahmeöffnung eines um eine Drehachse rotierenden Grundkörpers ein als Kugelhülse ausgeführtes Zentrierelement zur Zentrierung eines Kupplungschafts des Werkzeughalters angeordnet ist. Die Kugelhülse enthält einen hülsenförmigen Kugelkäfig, in dem kugelförmige Rollkörper geführt sind. Um den Kugelkäfig verkantungsfrei zur durchmessergrößeren Seite des Kupplungsschafts hin vorspannen zu können, sind in Umfangsrichtung verteilt mehrere Druckfedern zwischen dem Kugelkäfig und einer Stützschulter innerhalb des Grundkörpers eingespannt. Ein Anschlagring des Grundkörpers begrenzt den Weg des Kugelkäfigs. Durch die Druckfedern kann der Kugelkäfig zwar einen bestimmten Verfahrweg des Kupplungsschafts beim Spannvorgang mitmachen, jedoch können sich durch die größere Anzahl an separaten und gegeneinander verschiebbaren Einzelteilen Probleme mit der Rundlaufgenauigkeit ergeben.

Aufgabe der Erfindung ist es, eine Auswucht- oder Messvorrichtung der eingangs genannten Art und eine Auswucht- oder Messmaschine mit einer derartigen Auswucht- oder Messvorrichtung zu schaffen, die auch mit weniger Einzelteilen eine hohe Rundlaufgenauigkeit und eine zuverlässige Positionierung des Zentrierelements gewährleisten.

Diese Aufgabe wird durch eine Auswucht- oder Messvorrichtung mit den Merkmalen des Anspruchs 1 und durch eine Auswucht- oder Messmaschine mit den Merkmalen des Anspruchs 10 gelöst. Zweckmäßige Weiterbildungen und vorteilhafte Ausführungsformen der Erfindung sind Gegenstand der Unteransprüche.

Bei der erfindungsgemäßen Auswucht- oder Messvorrichtung ist die die Federanordnung einteilig mit dem Zentrierelement ausgebildet und mit diesem fest verbunden. Dadurch können Relativbewegungen zwischen dem Zentrierelement und der Federanordnung und dadurch bedingte Rundlaufungenauigkeiten vermieden werden. Es sind außerdem weniger Teile erforderlich, wodurch sich der Fertigungs- und Montageaufwand verringert. Durch die an dem Zentrierelement vorgesehene Federanordnung kann das Zentrierelement eine Axialbewegung des Kupplungszapfens beim Spannvorgang mitmachen und kehrt beim Lösen aufgrund der Federwirkung wieder selbsttätig in die Ausgangslage zurück. Zudem wird auch eine vereinfachte Bedienung erreicht, da sich das Zentrierelement immer in der richtigen Position befindet und eine manuelle Positionierung damit unnötig wird.

Das Zentrierelement ist als Wälzkörperhülse mit einem hülsenförmigen Wälzkörperkäfig und mehreren darin gelagerten Wälzkörpern ausgeführt. Die Federanordnung wird auf fertigungstechnisch einfache und kostengünstige Weise durch einen mit Durchbrüchen versehenen unteren Teil des Wälzkörperkäfigs gebildet. Durch die Durchbrüche kann der untere Teil des Wälzkörperkäfigs zusammengedrückt werden und kehrt bei Entlastung wieder in seine ursprüngliche Form zurück.

Zur Erzielung einer guten Federwirkung kann der Wälzkörperkäfig eine oder mehrere aufeinander folgende Reihen von in Umfangsrichtung voneinander beabstandeten Durchbrüchen aufweisen. Die Durchbrüche können z.B. als senkrecht zur Mittelachse des Wälzkörperkäfigs verlaufende Querschlitze oder spiralförmig verlaufende Schlitze ausgebildet sein. Auch andere Formen von Durchbrüchen sind möglich.

An dem Außenumfang des Wälzkörperkäfigs können ferner radial nach außen vorstehende, in Radialrichtung nachgiebige Halteelemente z.B. in Form von schrägen Stegen vorgesehen sein. Dadurch kann der Wälzkörperkäfig innerhalb der Aufnahmeöffnung des Grundköpers fixiert und zentriert werden.

Der Wälzkörperkäfig kann zwischen einem Ringabsatz im Grundkörpers und einem auf der Oberseite des Grundkörpers befestigten Abdeckring eingespannt sein. Dadurch ist eine Vorspannung des Zentrierelements erreichbar. Der Wälzkörperkäfig kann aber auch ohne Vorspannung in eine Aufnahmeöffnung des Grundkörpers eingesetzt werden.

Die Wälzkörper können als Kugeln ausgebildet und in entsprechenden Öffnungen des Wälzkörperkäfigs gelagert sein. Es sind aber auch andere Formen von Wälzkörpern möglich. Der Wälzkörperkäfig kann einen runden, polygonalen oder anderen Querschnitt aufweisen.

Die Erfindung betrifft außerdem eine Auswucht- oder Messmaschine, die eine vorstehend beschriebene und z.B. als Adapter ausgebildete Auswucht- oder Messvorrichtung enthält. Durch die Ausführung als Adapter die Auswucht- oder Messvorrichtung einfach ausgetauscht und eine Auswucht- oder Messmaschine relativ schnell und einfach an unterschiedliche Typen von Kupplungsschäften angepasst werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Auswucht- oder Messvorrichtung mit einer Wälzkörperhülse als Zentrierelement in einer ungespannten Stellung im Querschnitt;
- **Figur 2**: die Auswucht- oder Messvorrichtung von Figur 1 mit der Wälzkörperhülse in einer gespannten Stellung im Querschnitt;
- **Figur 3**: ein erstes Ausführungsbeispiel eines Wälzkörperkäfigs der Wälzkörperhülse von Figur 1 in einer ungespannten Stellung;
- **Figur 4**: den Wälzkörperkäfig von Figur 3 in einer gespannten Stellung;
- **Figur 5**: ein zweites Ausführungsbeispiel eines Wälzkörperkäfigs der Auswucht- oder Messvorrichtung von Figur 1 in einer ungespannten Stellung;
- **Figur 6**: ein zweites Ausführungsbeispiel einer Auswucht- oder Messvorrichtung mit einer Wälzkörperhülse als Zentrierelement in einer gespannten Stellung im Querschnitt;
- **Figur 7**: einen Wälzkörperkäfig der Auswucht- oder Messvorrichtung von Figur 6 in einer Perspektive und
- **Figur 8**: den Wälzkörperkäfig von Figur 7 in einer Seitenansicht.

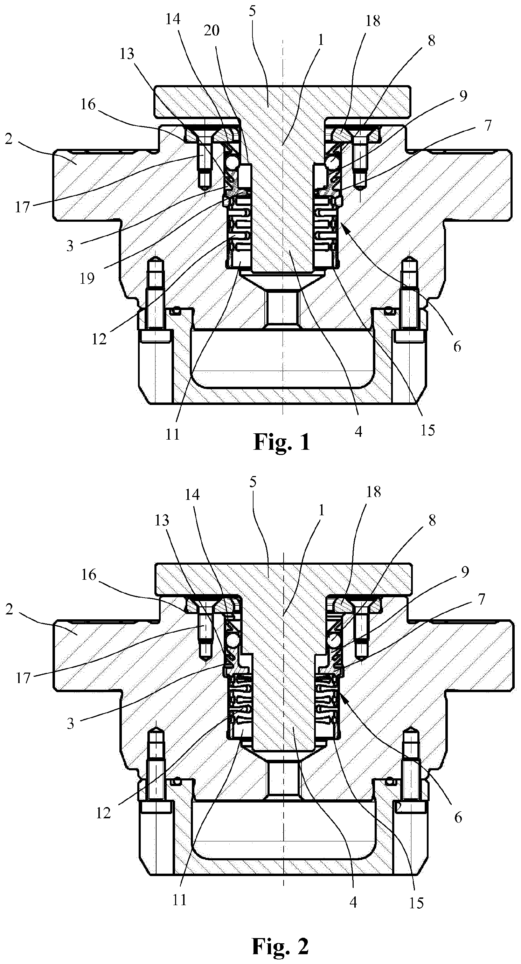

In den Figuren 1 und 2 ist ein um eine Drehachse 1 rotierender Grundkörper 2 gezeigt, der eine Aufnahmeöffnung 3 zur Aufnahme des Kupplungsschafts 4 eines Werkzeughalters, Werkzeugs, oder eines anderen auszuwuchtenden oder zu vermessenden Bauteils 5 enthält. In die Aufnahmeöffnung 3 des Grundkörpers 2 ist ein zur Drehachse 1 koaxiales Zentrierelement 6 zur Rundlaufzentrierung des Bauteils 5 innerhalb der Aufnahmeöffnung 3 des Grundkörpers 2 eingesetzt. Der Grundkörper 2 und das Zentrierelement 6 sind Teile einer Auswucht- oder Messvorrichtung, die in einer Auswucht- oder Messmaschine zum Auswuchten oder Vermessen rotierender Bauteile eingesetzt wird. Bei der gezeigten Ausführung ist der Grundkörper mit dem zugehörigen Zentrierelement 6 als Adapter zur Befestigung auf einer motorisch angetriebenen Maschinenspindel einer Auswucht- oder Messmaschine ausgeführt. Dadurch kann eine Auswucht- oder Messmaschine relativ schnell und einfach an unterschiedliche Typen von Kupplungsschäften angepasst werden. Der Grundkörper 2 kann aber auch die z.B. motorisch angetriebene Maschinenspindel selbst sein.

Das im Grundkörper 2 angeordnete Zentrierelement 6 ist bei der gezeigten Ausführung als Wälzkörperbuchse mit einem buchsenförmigen Wälzkörperkäfig 7 und mehreren in dem Wälzkörperkäfig 7 drehbar gelagerten und hier kugelförmigen Wälzkörpern 8 ausgeführt.

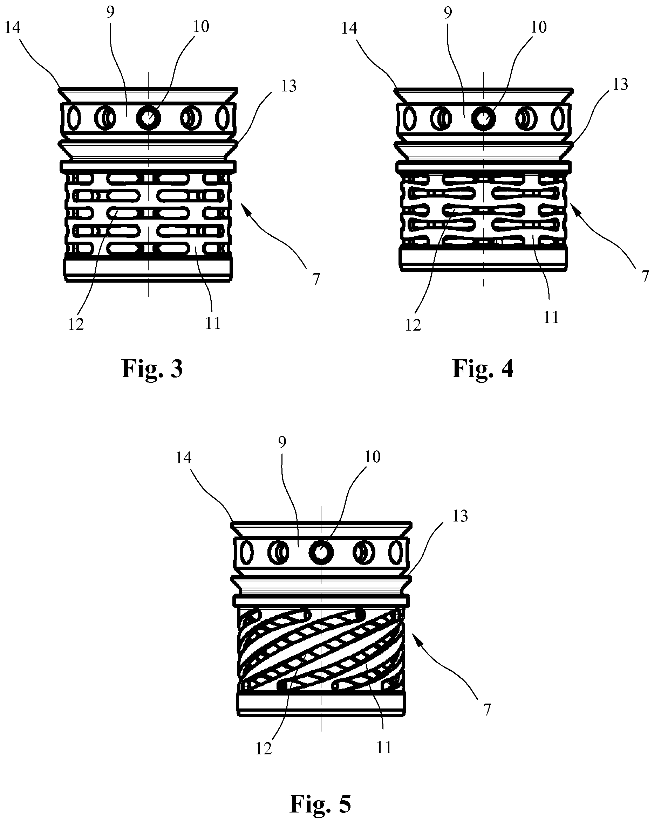

Wie besonders aus den Figuren 3 bis 5 hervorgeht, enthält der buchsenförmige Wälzkörperkäfig 7 einen oberen Teil 9, in dem eine Reihe oder mehrere Reihen über den Umfang gleichmäßig verteilter Öffnungen 10 zur Aufnahme der kugelförmigen Wälzkörper 8 angeordnet sind. In den hier kreisrunden Öffnungen 10 sind die kugelförmigen Wälzkörper 8 nach innen und außen vorstehend geführt. Der Wälzkörperkäfig 7 enthält außerdem einen hohlzylindrischen unteren Teil 11, in dem mehrere über den Umfang verteilte Durchbrüche 12 angeordnet sind.

Bei der in Figur 3 und 4 gezeigten Ausführung sind mehrere in Axialrichtung aufeinanderfolgende Reihen mit in Umfangsrichtung voneinander beabstandeten Durchbrüchen 12 in Form von Querschlitzen vorgesehen. Die Durchbrüche 12 der aufeinanderfolgenden Reihen sind dabei in Umfangsrichtung zueinander versetzt. Durch diese Durchbrüche 12 kann der der untere Teil 11 des Wälzkörperkäfigs 7 aus der in Figur 3 gezeigten Ausgangsstellung in die in Figur 4 Stellung zusammengedrückt werden und bildet eine Federanordnung, die bei Entlastung zu einer Rückkehr des Wälzkörperkäfigs 7 in seine Ausgangsform von Figur 3 sorgt. Zwischen dem oberen Teil 9 und dem unteren Teil 11 sowie an dem oberen Ende weist der Wälzkörperkäfig 7 am Außenumfang ferner radial nach außen vorstehende, in Radialrichtung nachgiebige Halteelemente 13 und 14 in Form von schrägen Stegen auf. Durch diese stegförmigen, in Umfangsrichtung umlaufenden Halteelemente 13 und 14 kann der Wälzkörperkäfig 7 innerhalb der Aufnahmeöffnung 3 des Grundköpers 2 zentriert gehalten werden.

In Figur 1 ist erkennbar, dass der Wälzkörperkäfig 7 zwischen einem unteren Ringabsatz 15 in der Aufnahmeöffnung 3 des Grundkörpers 2 und einem in einer Ringnut 16 auf der Oberseite des Grundkörpers 2 mittels Schrauben 17 befestigten Abdeckring 18 eingespannt und in Axialrichtung vorgespannt ist. Der Wälzkörperkäfig 7 enthält einen inneren Ringsteg 19 und der Kupplungsschaft 4 einen Absatz 20.

In Figur 5 ist ein weiteres Ausführungsbeispiel eines Wälzkörperkäfigs gezeigt. Bei dieser Ausführung sind die Durchbrüche 12 im unteren hohlzylindrischen Teil 11 als spiralförmig verlaufende und voneinander Schlitze ausgeführt. Ansonsten entspricht diese Ausführung dem Ausführungsbeispiel der Figuren 3 und 4, so dass einander entsprechende Elemente auch mit denselben Bezugszeichen versehen sind.

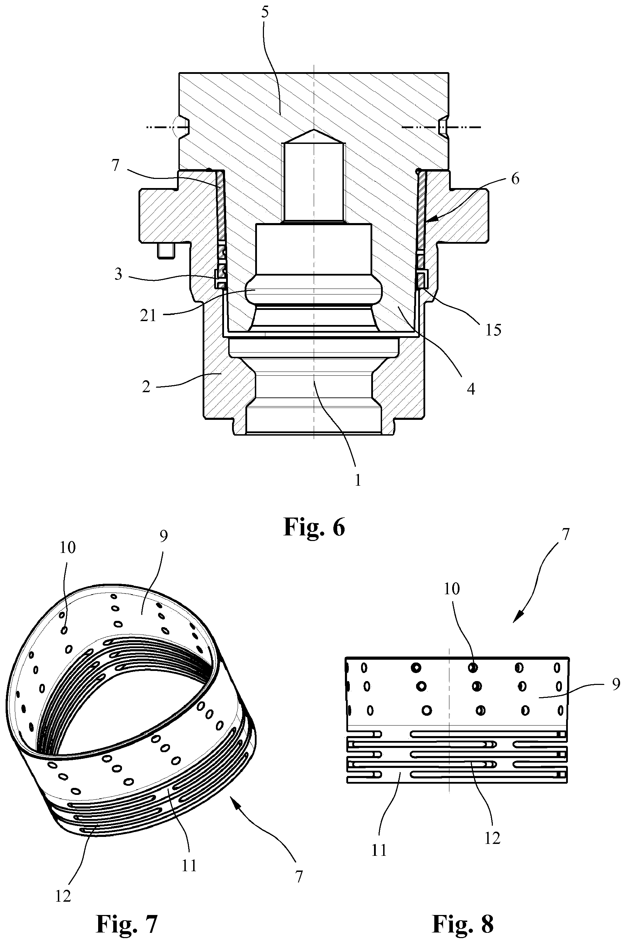

Die Figur 6 zeigt einen um eine Achse 1 drehbaren Grundkörper 2 einer Auswucht- oder Messvorrichtung für Bauteile 5, die einen konischen Kupplungsschaft 4 mit Polygonprofil aufweisen. Bei der gezeigten Ausführung ist das Bauteil 5 als Werkzeugaufnahme mit einer inneren Ringnut 21 zum Eingriff von innen nach außen spannender Spannzangen einer an sich bekannten und daher nicht dargestellten Spannvorrichtung ausgeführt. Auch bei dieser Ausführung ist in eine Aufnahmeöffnung 3 des Grundkörpers 2 ein zur Drehachse 1 koaxiales Zentrierelement 6 zur Rundlaufzentrierung des Bauteils 5 innerhalb der Aufnahmeöffnung 3 des Grundkörpers 2 eingesetzt. Das Zentrierelement 6 ist bei der gezeigten Ausführung ebenfalls als Wälzkörperbuchse mit einem buchsenförmigen Wälzkörperkäfig 7 und mehreren in dem Wälzkörperkäfig 7 drehbar gelagerten und hier nicht dargestellten Wälzkörpern ausgeführt. Der Wälzkörperkäfig 7 sitzt auch mit seinem unteren Ende auf einem unteren Ringabsatz 15 in der Aufnahmeöffnung 3 des Grundkörpers 2. Im Unterschied zu der Ausführung der Figuren 1 bis 5 weist der Wälzkörperkäfig 7 einen Polygonquerschnitt auf und ist nicht gegen einen oberen Abdeckring vorgespannt.

Wie aus den Figuren 7 und 8 hervorgeht, enthält auch dieser Wälzkörperkäfig 7 einen oberen Teil 9, in dem mehrere übereinanderliegende Reihen über den Umfang gleichmäßig verteilter Öffnungen 10 zur Aufnahme der Wälzkörper 8 angeordnet sind. Die Öffnungen 10 der aufeinanderfolgenden Reihen sind in Umfangsrichtung gegeneinander versetzt. In einem unteren Teil 11 sind mehrere Reihen über den Umfang verteilter Durchbrüche 12 in Form von Querschlitzen vorgesehen. Die Durchbrüche 12 der aufeinanderfolgenden Reihen sind dabei in Umfangsrichtung zueinander versetzt. Durch diese Durchbrüche 12 bildet der untere Teil 11 auch hier ein Federelement, das beim Zusammendrücken des Wälzkörperkäfigs 7 eine Verformung in axialer Richtung ermöglicht.

## Patentansprüche

1. Auswucht- oder Messvorrichtung, die einen um eine Achse (1) drehbaren Grundkörper (2) mit einer Aufnahmeöffnung (3) zur Aufnahme eines Kupplungsschafts (4) eines auszuwuchtenden oder zu vermessenden Bauteils (5) und ein in dem Grundkörper (2) entgegen einer Federanordnung (11, 12) axial verschiebbares Zentrierelement (6) zur Zentrierung des Bauteils (5) in dem Grundkörper (2) enthält, **dadurch gekennzeichnet, dass** die Federanordnung (11, 12) einteilig mit dem Zentrierelement (6) ausgebildet ist, das Zentrierelement (6) einen mit Wälzkörpern (8) bestückten Wälzkörperkäfig (7) umfasst und die Federanordnung (11, 12) durch einen mit Durchbrüchen (12) versehenen unteren Teil (11) des Wälzkörperkäfigs (7) gebildet wird.

2. Auswucht- oder Messvorrichtung nach Anspruch 1, **dadurch gekennzeichnet, dass** der Wälzkörperkäfig (7) eine oder mehrere aufeinander folgende Reihen von in Umfangsrichtung voneinander beabstandeten Durchbrüchen (12) enthält.

3. Auswucht- oder Messvorrichtung nach Anspruch 1 oder 2, **dadurch gekennzeichnet, dass** die Durchbrüche (12) als Querschlitze oder spiralförmig verlaufende Schlitze ausgebildet sind.

4. Auswucht- oder Messvorrichtung nach einem der Ansprüche 1 bis 3, **dadurch gekennzeichnet, dass** die Wälzkörper (8) in einem oberen Teil (9) des Wälzkörperkäfigs (7) drehbar gelagert sind.

5. Auswucht- oder Messvorrichtung nach einem der Ansprüche 1 bis 4, **dadurch gekennzeichnet, dass an** dem Außenumfang des Wälzkörperkäfigs (7) radial nach außen vorstehende, in Radialrichtung nachgiebige Halteelemente (13, 14) angeordnet sind.

6. Auswucht- oder Messvorrichtung nach einem der Ansprüche 1 bis 5, **dadurch gekennzeichnet, dass** der Wälzkörperkäfig (7) zwischen einem Ringabsatz (15) im Grundkörper (2) und einem auf der Oberseite des Grundkörpers (2) befestigten Abdeckring (18) eingespannt ist.

7. Auswucht- oder Messvorrichtung nach einem der Ansprüche 1 bis 6, **dadurch gekennzeichnet, dass** die Wälzkörper (8) als Kugeln ausgebildet sind.

8. Auswucht- oder Messvorrichtung nach einem der Ansprüche 5 bis 7, **dadurch gekennzeichnet, dass** der Wälzkörperkäfig (7) einen Kreisquerschnitt oder Polygonquerschnitt aufweist.

9. Auswucht- oder Messvorrichtung nach einem der vorhergehenden Ansprüche, **dadurch gekennzeichnet, dass** die Aufnahmeöffnung (3) zur Aufnahme des Kupplungsschafts (4) konisch oder zylindrisch ausgebildet ist.

10. Auswucht- oder Messmaschine mit einer Auswucht- oder Messvorrichtung, **dadurch gekennzeichnet, dass** die Auswucht- oder Messvorrichtung nach einem der Ansprüche 1 bis 9 ausgebildet ist.

## Claims

1. Balancing or measuring device which contains a base body (2) which is rotatable about an axis (1) and includes a receiving opening (3) for receiving a coupling shaft (4) of a component (5) to be balanced or to be measured and a centring element (6) which is displaceable axially in the base body (2) counter to a spring arrangement (11, 12) for centring the component (5) in the base body (2), **characterised in that** the spring arrangement (11, 12) is designed to be integral with the centring element (6), which centring element (6) comprises a roll body cage (7) fitted with roll bodies (8) and the spring arrangement (11, 12) is formed by a lower part (11) of the roll body cage (7) provided with openings (12).

2. Balancing or measuring device according to claim 1, **characterised in that** the roll body cage (7) includes one or more successive rows of openings (12) spaced from one another peripherally.

3. Balancing or measuring device according to claim 1 or 2, **characterised in that** the openings (12) are designed as transverse slots or helically running slots.

4. Balancing or measuring device according to one of claims 1 to 3, **characterised in that** the roll bodies (8) ae mounted to be rotatable in an upper part (9) of the roll body cage (7).

5. Balancing or measuring device according to one of claims 1 to 4, **characterised in that** radially outwardly projecting holding elements (13, 14) which are flexible radially are arranged on the outer periphery of the roll body cage (7).

6. Balancing or measuring device according to one of claims 1 to 5, **characterised in that** the roll body cage (7) is clamped between an annular shoulder (15) in the base body (2) and a cover ring (18) attached to the upper side of the base body (2).

7. Balancing or measuring device according to one of claims 1 to 6, **characterised in that** the roll bodies (8) are designed as spheres.

8. Balancing or measuring device according to one of claims 5 to 7, **characterised in that** the roll body cage (7) has a circular cross-section or polygonal cross-section.

9. Balancing or measuring device according to one of the preceding claims, **characterised in that** the receiving opening (3) for receiving the coupling shaft (4) is designed to be conical or cylindrical.

10. Balancing or measuring machine having a balancing or measuring device, **characterised in that** the balancing or measuring device is designed according to one of claims 1 to 9.

## Revendications

1. Dispositif d'équilibrage ou de mesure, qui contient un corps de base (2) pouvant tourner autour d'un axe (1), avec une ouverture de logement (3) servant à loger une tige de couplage (4) d'un composant (5) à équilibrer ou à mesurer et un élément de centrage (6) pouvant être coulissé de manière axiale dans le corps de base (2) à l'encontre d'un ensemble de ressort (11, 12), servant à centrer le composant (5) dans le corps de base (2), **caractérisé en ce que** l'ensemble de ressort (11, 12) est réalisé en une partie avec l'élément de centrage (6), l'élément de centrage (6) comprend une cage de corps de roulement (7) équipée de corps de roulement (8), et l'ensemble de ressort (11, 12) est formé par une partie inférieure (11) de la cage de corps de roulement (7) pourvue d'ajours (12).

2. Dispositif d'équilibrage ou de mesure selon la revendication 1, **caractérisé en ce que** la cage de corps de roulement (7) contient une ou plusieurs rangées se suivant les unes les autres d'ajours (12) espacés les uns des autres dans la direction périphérique.

3. Dispositif d'équilibrage ou de mesure selon la revendication 1 ou 2, **caractérisé en ce que** les ajours (12) sont réalisés sous la forme d'entailles transversales ou d'entailles s'étendant en forme de spirale.

4. Dispositif d'équilibrage ou de mesure selon l'une quelconque des revendications 1 à 3, **caractérisé en ce que** les corps de roulement (8) sont montés de manière à pouvoir tourner dans une partie supérieure (9) de la cage de corps de roulement (7).

5. Dispositif d'équilibrage ou de mesure selon l'une quelconque des revendications 1 à 4, **caractérisé en ce que** des éléments de maintien (13, 14) faisant saillie vers l'extérieur radialement, souples dans une direction radiale sont disposés au niveau de la périphérie extérieure de la cage de corps de roulement (7) .

6. Dispositif d'équilibrage ou de mesure selon l'une quelconque des revendications 1 à 5, **caractérisé en ce que** la cage de corps de roulement (7) est enserrée entre un retrait annulaire (15) dans le corps de base (2) et une bague de recouvrement (18) fixée sur le côté supérieur du corps de base (2).

7. Dispositif d'équilibrage ou de mesure selon l'une quelconque des revendications 1 à 6, **caractérisé en ce que** les corps de roulement (8) sont réalisés sous la forme de billes.

8. Dispositif d'équilibrage ou de mesure selon l'une quelconque des revendications 5 à 7, **caractérisé en ce que** la cage de corps de roulement (7) présente une section transversale circulaire ou une section transversale polygonale.

9. Dispositif d'équilibrage ou de mesure selon l'une quelconque des revendications précédentes, **caractérisé en ce que** l'ouverture de logement (3) est réalisée de manière conique ou cylindrique pour loger la tige de couplage (4).

10. Machine d'équilibrage ou de mesure avec un dispositif d'équilibrage ou de mesure, **caractérisée en ce que** le dispositif d'équilibrage ou de mesure est réalisé selon l'une quelconque des revendications 1 à 9.
